**Europäisches Patentamt**

**European Patent Office**

**Office européen des brevets**

(11) Publication number: **0 085 284**
**B1**

(12) **EUROPEAN PATENT SPECIFICATION**

(45) Date of publication of patent specification: **10.12.86**　　(51) Int. Cl.⁴: **B 23 D 21/04**

(21) Application number: **82850211.2**

(22) Date of filing: **26.10.82**

(54) Machine for cutting of armoured or reinforced hoses.

(30) Priority: **30.12.81 SE 8107876**

(43) Date of publication of application:
**10.08.83 Bulletin 83/32**

(45) Publication of the grant of the patent:
**10.12.86 Bulletin 86/50**

(84) Designated Contracting States:
**DE FR GB IT**

(56) References cited:
**DE-A-2 906 177**
**DE-B-1 242 854**
**DE-B-2 340 535**
**US-A-3 149 440**
**US-A-3 759 121**
**US-A-3 978 747**

**Soviet Inventions Illustrated, Week B 38, 31
October 1979, Section A35**
**Patent Abstracts of Japan, Vol. 5, No.174, 10
November 1981**

(73) Proprietor: **Fjällström, Bengt**
**Södra Kungsvägen 9**
**S-522 00 Tidaholm (SE)**

(72) Inventor: **Fjällström, Bengt**
**Södra Kungsvägen 9**
**S-522 00 Tidaholm (SE)**

(74) Representative: **Uusitalo, Isak**
**Carminger, Uusitalo & Nyberg Patentbyra AB**
**Box 19055 Surbrunnsgatan 32**
**S-104 32 Stockholm (SE)**

Courier Press, Leamington Spa, England.

## Description

The invention relates to a hose cutting machine for cutting armoured or reinforced hose, in particular steel armoured or reinforced hydraulic hose, having a frame part, a rotable centre part, a cog wheel transmission for rotating the center part and the frame part by means of a motor via a cog wheel, means including a slide, an exchangeable guide and a cylinder for feeding the hose through the centre part and the frame part, wherein the hose can be gripped by means of a chuck and holding means, a cutting tool being carried by the frame part relative to the centre of the frame part. Such a prior art machine is known from DE—A—29 06 177.

A main object of the invention is to provide for a machine for cutting armoured or reinforced hoses and preferably steel armoured or reinforced hydraulic hoses in such a way, that fragments from the armouring or the reinforced layer is prevented from entering the hose during a hose cutting operation.

This is achieved in that the cutting tool is a cutting wheel, that a sensor device is provided for sensing wear of the cutting wheel by sensing the position of the periphery of the cutting wheel relative to the hose, which position being, when necessary, automatically corrected by means of a motor via a screw, the cutting wheel being intended for cutting the outer layer of the hose, for example a steel armoured layer, the sensor device being operated forward and backwards by means of a motor via a screw, a guillotine knife intended for cutting the inner layer of the hose being firmly attached to a fixing device movably supported by the frame part and being operated by means of a cylinder via guides for feeding forward, cutting and feeding out operations during cutting of a hose under the control of a microprocessor, in which the diameter of a hose, the length of a hose and number of intended cuttings are programmed to provide for an automatic operation for cutting of hoses, especially steel armoured or reinforced hoses.

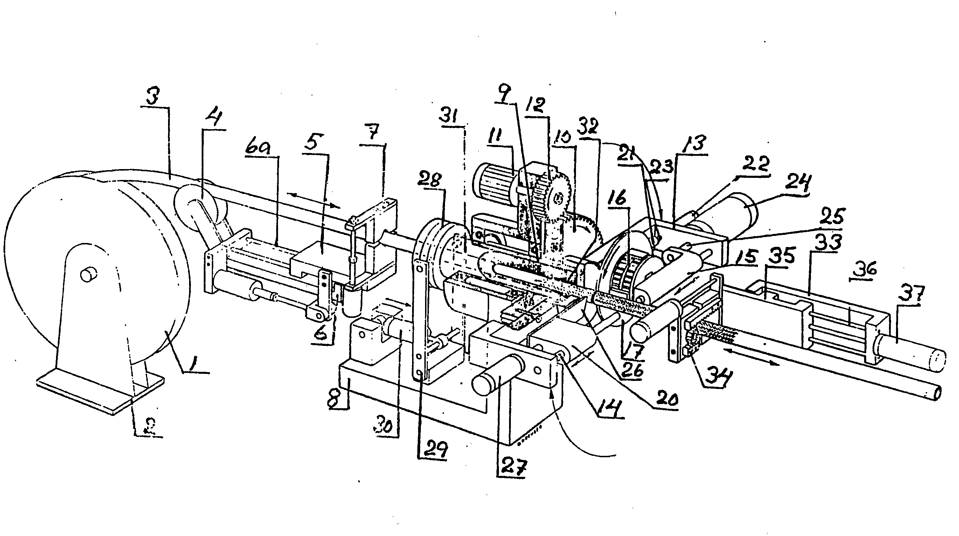

The machine according to the invention will now be described in detail in the following with reference to the appended drawing, where one form of the machine according to the invention is shown only as an example and not limiting the scope of the invention.

A hose roll 1 is exchangeably mounted at a frame element 2. When cutting of preferably armoured or reinforced hoses 3 the hose is lead over a roller 4. A slide 5 is arranged for feeding appropriate lengths of armoured or reinforced hydraulic hoses 3 through the cutting machine.

The slide 5 is arranged at a frame part 6 with guides 6a for forward and backward movements. The slide 5 supports means 7 for holding the hose 3 during its feeding forwards towards a cutting position.

In the frame part 8 a rotatable centre part 9 is arranged, which centre part 9 is provided with a cog wheel transmission, which is rotatable by means of a motor 11 via a cog wheel 12. The cog wheel transmission 10 is in turn arranged to bring a frame part 13 into rotation, whereby the frame part 13 supports necessary means for cutting a steel armoured or reinforced hydraulic hose 3. The frame part 13 is provided with a device 15 movable towards the hose 3 intended to be cut, movable device 15, which device includes a motor 16 arranged to bring a cutting wheel 17 into rotation. Furthermore a sensor device movable one towards the cutting wheel 17 is arranged for sensing the wear of the cutting wheel 17. The degrees of the wear determines what distance the cutting wheel 17 must be moved towards the hose 3 intended to be cut. Furthermore the frame part 13 is arranged with guides 14, which support a fixing device 20 movable towards the hose 3, on which fixing device 20 a guillotine knife is attached. A steel armoured hydraulic hose consists preferably of an inner gummed layer, armouring and an outer gummed layer. The cutting wheel 17 is used for cutting of the outer gummed layer and the armouring or reinforcing, while the guillotine knife is used for cutting of the inner gummed layer.

The sensor device 21, which is arranged for determination of the wear of the cutting wheel 17, is moved or operated towards the wheel 17 by means of a motor 22 via a screw 23.

The rotatable cutting device 15 is moved towards and from the hose 3 during a cutting operation by means of a motor 24 via a screw 25.

The movable guillotine 26 is guided via guides 14 by means of a cylinder 27.

The armoured hose 3 is passed through an exchangeable guide 28, which is moved towards and from the centre part 9 by means of a lever arm 29 and a cylinder 30. An exchangeable chuck 31, which is preferably provided with a hollow, conical and compressable cushion 32 in its front end, is provided for holding of the hose 3 during a cutting operation.

A feeding forward and out of the hose 3 part is effected by means of a slide 33, which is movable at a holder 35 via guides 36. The holder 35 includes means 34 for holding of the hose 3 during the cutting and the out-feeding operation. The slide 33 is operated by means of a cylinder 37.

A particle collector (not shown) is applicated or arranged in the area of the cutting wheel 17 to follow the rotation of the frame part 13. Because a decrease in pressure is achieved in the area of the cutting wheel 17 the particles abraded during the cutting operation will be sucked up and collected.

A transport path for cut parts of hoses 3 is arranged.

The control of the forward feeding, the cutting and the out-feeding operations is achieved by means of a micro-processor, in which the diameter of the hose, the lengths of the hose parts and number of intended cuttings are programmed to provide for an automatic operation for cutting of especially steel armoured hydraulic hoses.

## Claim

Hose cutting machine for cutting armoured or reinforced hose (3), in particular steel armoured or reinforced hydraulic hose, having a frame part (13), a rotatable centre part (9), a cog wheel transmission (10) for rotating the center part (9) and the frame part (13) by means of a motor (11) via a cog wheel (12), means (5, 28, 30) including a slide (5), an exchangeable guide (28) and a cylinder (30) for feeding the hose (3) through the centre part (9) and the frame part (13), wherein the hose (3) can be gripped by means of a chuck (31) and holding means (34), a cutting tool (17) being carried by the frame part (13) and movable relative to the centre of the frame part (13), characterised in that the cutting tool is a cutting wheel (17), in that a sensor device (21) is provided for sensing wear of the cutting wheel (17) by sensing the position of the periphery of the cutting wheel (17) relative to the hose (3), which position being, when necessary, automatically corrected by means of a motor (24) via a screw (25), the cutting wheel (17) being intended for cutting the outer layer of the hose, for example a steel armoured layer, the sensor device (21) being operated forward and backwards by means of a motor (22) via a screw (23), a guillotine knife (26) intended for cutting the inner layer of the hose being firmly attached to a fixing device (20) movably supported by the frame part (13) and being operated by means of a cylinder (27) via guides (14) for feeding forward, cutting and feeding out operations during cutting of a hose under the control of a microprocessor, in which the diameter of a hose, the length of a hose and number of intended cuttings are programmed to provide for an automatic operation for cutting of hoses, especially steel armoured or reinforced hoses.

## Patentanspruch

Maschine zum Abschneiden vor armierten oder verstärkten Schläuchen (3), besonders stahlarmierten oder verstärkten hydraulischen Schläuchen, mit einem Rahmenteil (13), einem rotierbaren Zentrumteil (9), einem Zahnradgetriebe (10) zum Umdrehung des Zentrumteils (9) sowie des Rahmenteils (13) durch einen Motor (11) über ein Zahnrad (12), Mitteln (5, 28, 30) einschliessend einem Schiebar (5), einer austauschbaren Führung (28) sowie einem Zylinder (30) zwecks Förderung des Schläuchens (3) durch den Zentrumteil (9) und den Rahmenteil (13), wobei das Schläuchen durch ein Aufspannfutter (31) sowie eine Haltevorrichtung (34) erfasst werden kann, und einem Schneidewerkzeug (17), das durch den Rahmenteil (13) unterstützt und bewegbar zum Zentrum des Rahmenteils (13) ist, gekennzeichnet dadurch, dass das Schneidewerkzeug eine Schneidescheibe (17) ist, dass eine Abtastvorrichtung (2) zum Abtasten von Verschleiss der Schneidescheibe (17) durch Abtasten der Umfangslage der Schneidescheibe (17) zum Schläuchen (3) vorgesehen ist, welche Lage, wenn notwendig, mit Hilfe eines Motors (24) über eine Schraube (25) korrigiert wird, wobei die Schneidescheibe (17) zum Abschneiden der äusseren Schicht des Schläuchens, z.B. eine stahlarmierte Schicht beabsichtigt ist, dass die Abtastvorrichtung (21) durch einen Motor (22) über eine Schraube (23) vorwärts und rückwärts getrieben ist, dass ein Fallmesser (26) vorgesehen ist zum Abschneiden der inneren Schicht des Schläuchens, welches Messer von einer Einspannvorrichtung (20) festgehalten ist, die durch den Rahmenteil (13) beweglich unterstützt ist, und weiter durch ein Zylinder über Führunge (14) zwecks Vorwärtsfördern, Abschneide- und Ausgabeantrieb während des Abschneidens eines Schläuchens getrieben ist unter Überwachung eines Mikrocomputers, in welchem der Durchmesser des Schläuchens, die Länge des Schläuchens und eine Anzahl von beabsichtigten Abschneidungen programmiert sind um selbsttätigen Betrieb zum Abschneiden von Schläuchen, besonders stahlarmierten oder verstärkten Schläuchen zu erreichen.

## Revendication

Machine pour le tronçonnage d'une conduite flexible armée ou renforcée (3), en particulier d'une conduite flexible armée ou renforcée par de l'acier, comportant une partie de châssis (13), une partie centrale rotative (9), une transmission à roues dentées (10) apte à entraîner en rotation la partie centrale (9) et la partie de châssis (13) au moyen d'un moteur (11) par l'intermédiaire d'une roue dentée, des moyens (5, 28, 30) comportant une glissière (5), un moyen de guidage interchangeable (28) et un vérin (30) aptes à avancer la conduite à travers la partie centrale (9) et la partie de châssis (13), dans laquelle la conduite (3) peut être serrée à l'aide d'un mandrin (31) et de moyens de retenue (34), un outil coupant (17) étant porté par la partie de châssis (13) et mobile par rapport au centre de la partie de châssis (13), caractérisée en ce que l'outil coupant est une meule tronçonneuse (17), en ce qu'un dispositif capteur est prévu pour détecter l'usure de la meule tronçonneuse (17) en détectant la position de la périphérie de ladite meule tronçonneuse (17) par rapport à la conduite (3), laquelle position étant, si nécessaire, corrigée automatiquement à l'aide d'un moteur (24) l'intermédiaire d'une vis (25), la meule tronçonneuse (17) étant destinée à couper la couche extérieure de la conduite, par exemple une couche armée en acier, le dispositif capteur (21) étant déplacé vers l'avant et vers l'arrière à l'aide d'un moteur (22) par l'intermédiaire d'une vis (23), un couteau à guillotine (26) destiné à couper la couche intérieure de la conduite étant rigidement fixé à un organe de fixation (20) porté de façon mobile par la partie de châssis (13) et étant actionné par un vérin (27) par l'intermédiaire de guides (14) pour effectuer l'avance, la coupe et l'évacuation au cours du tronçonnage de la conduite flexible sous le contrôle d'un microprocesseur, dans lequel le diamètre et la longueur de la conduite ainsi que le nombre de tronçonnages prévus sont programmés pour réaliser une opération automatique de tronçonnage de conduites flexibles, en particulier de conduites flexibles armées ou renforcées par de l'acier.

0 085 284